(19) **Europäisches Patentamt / European Patent Office / Office européen des brevets**

(11) **EP 2 920 229 B1**

(12) **FASCICULE DE BREVET EUROPEEN**

(45) Date de publication et mention
de la délivrance du brevet:
**13.02.2019 Bulletin 2019/07**

(21) Numéro de dépôt: **13795197.6**

(22) Date de dépôt: **13.11.2013**

(51) Int Cl.:
*C08G 81/00* (2006.01)   *C08F 2/02* (2006.01)
*C08G 69/26* (2006.01)   *C08G 69/30* (2006.01)

(86) Numéro de dépôt international:
**PCT/EP2013/073702**

(87) Numéro de publication internationale:
**WO 2014/076120 (22.05.2014 Gazette 2014/21)**

(54) **CO-POLYAMIDE ALIPHATIQUE/SEMI-AROMATIQUE BLOC**

ALIPHATISCHES/HALBAROMATISCHES BLOCKCOPOLYAMID

ALIPHATIC/SEMI-AROMATIC BLOCK COPOLYAMIDE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **14.11.2012 FR 1260834**

(43) Date de publication de la demande:
**23.09.2015 Bulletin 2015/39**

(73) Titulaires:
• **Rhodia Operations
75009 Paris (FR)**
• **CNRS
75794 Paris Cedex 16 (FR)**

(72) Inventeurs:
• **HUSSEIN, Naji
Herry-Chekka (LB)**
• **LONG, Didier
F-69110 Sainte Foy les Lyon (FR)**
• **FILLOT, Louise-Anne
F-69120 Vaux-en-Velin (FR)**
• **TROUILLET-FONTI, Lise
38200 Villette-de-Vienne (FR)**

(74) Mandataire: **Vande Gucht, Anne et al
Solvay S.A.
Intellectual Assets Management
Rue de Ransbeek, 310
1120 Bruxelles (BE)**

(56) Documents cités:
**EP-A1- 0 615 997      WO-A1-2010/034805
WO-A1-2011/147739   US-A- 3 173 898
US-A- 5 155 178        US-A1- 2003 171 494**

• **K. L. L. EERSELS ET AL: "Transamidation in
Melt-Mixed Aliphatic and Aromatic Polyamides.
3. Molecular Characterization Using Gradient
Elution Chromatography (GEC)",
MACROMOLECULES, vol. 29, no. 21, 1 janvier
1996 (1996-01-01), pages 6744-6749,
XP055062541, ISSN: 0024-9297, DOI:
10.1021/ma960549b cité dans la demande**
• **David J Kemmish: "Practical Guide to High
Performance Engineering Plastics" In: "Practical
Guide to High Performance Engineering
Plastics", 30 July 2011 (2011-07-30),
XP055453887,**

EP 2 920 229 B1

**Description**

La présente invention concerne un procédé de préparation en fondu, notamment par extrusion réactive, de co-polyamide bloc comprenant au moins un bloc polyamide aliphatique et au moins un bloc semi-aromatique, en particulier dans lequel le groupement aromatique porte au moins une fonction hydroxyle ou sulfonate, et le co-polyamide bloc obtenu.

Les polymères thermoplastiques sont des matières premières susceptibles d'être transformées par moulage, moulage par injection, injection soufflage, extrusion, extrusion/soufflage ou filage, notamment en de multiples articles tels que des pièces, par exemple pour carrosserie, soufflées, extrudées, ou moulées, des fils, des fibres ou des films...

Il existe notamment deux contraintes majeures dans toutes ces filières de transformation de polymère thermoplastique.

La première de ces contraintes est que les polymères thermoplastiques mis en oeuvre doivent être caractérisés, à l'état fondu, par une viscosité ou un comportement rhéologique compatible avec les procédés de mise en forme susvisés. Ces polymères thermoplastiques doivent être suffisamment fluides lorsqu'ils sont en fusion, pour pouvoir être acheminés et manipulés aisément et rapidement dans certaines machines de mise en forme.

L'autre contrainte qui pèse sur les compositions polymères thermoplastiques est liée aux qualités mécaniques qu'ils doivent présenter après avoir été fondus, mis en forme et durcis par refroidissement. Ces qualités mécaniques sont notamment les propriétés thermomécaniques. Parmi les polymères thermoplastiques, les polyamides sont des polymères présentant un intérêt industriel et commercial important. Toutefois, il est toujours souhaitable d'améliorer leurs propriétés mécaniques, en particulier thermomécaniques.

En outre, les polyamides techniques sont utilisés pour la réalisation de nombreux articles dans différents domaines, comme le domaine de l'automobile, où des propriétés spécifiques de rigidité, de résistance aux chocs, de stabilité dimensionnelle, en particulier à températures relativement élevées, d'aspect de surface, de densité et de poids, sont particulièrement recherchées. Le choix d'un matériau pour une application donnée est généralement guidé par le niveau de performances exigées vis-à-vis de certaines propriétés et par son coût. On cherche en effet toujours de nouveaux matériaux susceptibles de répondre à un cahier des charges en termes de performance et/ou de coûts.

Par exemple, des matériaux polyamide sont utilisés pour la fabrication d'articles mono- ou multicouches destinés à contenir ou à transporter un fluide, tel que par exemple des tubes, conduites, réservoirs ou films. Cependant, ces matériaux peuvent présenter des propriétés barrières aux gaz ou aux liquides insuffisantes, et notamment présenter un compromis insatisfaisant avec d'autres propriétés telles que celles évoquées ci-dessus.

Les (co-)polymères décrits dans l'art antérieur peuvent notamment se révéler insatisfaisants en terme de propriétés physique et/ou thermomécaniques, et en particulier en termes de perméabilité aux fluides, notamment à l'éthanol, de tenue en fatigue et/ou de résistance aux chocs.

Les documents US 2003/171494 A1, EP 0 615 997 A1, et l'article "Transamidation in Melt-Mixed Aliphatic and Aromatic Polyamides. 3. Molecular Characterization Using Gradient Elution Chromatography (GEC)", par K. L. L. Eersels et al., Macromolecules, vol. 29, no. 21, 1 janvier 1996, pages 6744-6749, décrivent un procédé pour la préparation d'un co-polyamide comprenant au moins un bloc aliphatique et au moins un bloc semi-aromatique.

Le document WO2010034805 A1 décrit un polyamide modifié par un composé contenant au moins un groupement hydroxyle aromatique chimiquement lié à la chaîne du polymère. Ces polyamides modifiées sont utilisées dans des compositions pour améliorer leurs propriétés mécaniques, et en particulier thermomécaniques.

Le document WO2011147739 A1 décrit l'utilisation d'un polyamide comprenant au moins des monomères aliphatiques et éventuellement des monomères aromatiques, ledit (co)polyamide est modifié par un composé sulfonate, pour la réalisation d'articles ayant des propriétés barrières aux fluides augmentées.

La présente invention vise donc à proposer des polyamides visant à résoudre en tout ou partie les problèmes évoqués ci-dessus, et notamment à proposer des polyamides présentant des propriétés améliorées, notamment en terme de viscosité, souplesse et facilité de mise en forme, coût, propriétés barrières, notamment aux fluides, et en particulier à l'éthanol, de résistance en fatigue, et/ou de résistance aux chocs.

Par ailleurs, l'art antérieur ne décrit pas de procédé permettant d'obtenir des co-polyamides bloc de ce type. En particulier dans le cas de polyamides intégrant des monomères portant des fonctions alcool ou sulfonate sur un groupement aromatique l'art antérieur décrit uniquement l'obtention de co-polyamides statistiques.

Ainsi, l'invention vise à proposer un procédé permettant d'obtenir des co-polyamides blocs qui soit aisé à mettre en oeuvre, qui soit polyvalent, et/ou qui permette l'obtention de ces co-polyamides dans des conditions compatibles avec les processus industriels.

Selon un premier aspect, l'invention a pour objet un procédé de préparation en fondu de co-polyamide bloc semi-cristallin comprenant au moins un bloc aliphatique et au moins un bloc semi-aromatique, ledit procédé comprend au moins les étapes suivantes :

-    mélanger au moins un polyamide aliphatique et au moins un polyamide semi-aromatique, lesdits polyamides étant terminés par des fonctions capables de réagir entre elles,

- chauffer le mélange de manière à ce que les polyamides soient fondus et que la réaction de polycondensation puisse avoir lieu entre les polyamides,
- récupérer le co-polyamide comprenant au moins un bloc aliphatique et au moins un bloc semi-aromatique,

ledit polyamide semi-aromatique consistant en

- un diacide aromatique contenant au moins une fonction de type alcool et/ou sulfonate, combiné avec une seule diamine, ou
- une diamine aromatique contenant au moins une fonction du type alcool et/ou sulfonate, combiné avec un seul diacide;

dans lequel le mélange comprend un catalyseur de polycondensation,
la durée de l'étape de polycondensation est inférieure à 10 minutes, la température à laquelle la réaction de polycondensation est effectuée est supérieure à la température de fusion la plus haute des polyamides présents (Thf), et les blocs présentent une taille moyenne d'au moins 3 unités de répétition, cette taille moyenne est mesurée par RMN comme définie ci-après dans la description.

Par « co-polyamide bloc », on entend au sens de la présente invention que le co-polyamide n'est pas statistique, mais comprend, voire consiste en, des blocs présentant une taille moyenne d'au moins 3 unités de répétition, notamment d'au moins 4 unités de répétition. La longueur moyenne de chaque type de bloc, aliphatique ou semi-aromatique est définie ci-après dans la description.

Selon un deuxième aspect, l'invention a pour objet un co-polyamide bloc semi-cristallin susceptible d'être obtenu par le procédé tel que décrit dans le premier aspect de la présente invention.

Selon un mode de réalisation particulier, l'invention a pour objet un co-polyamide bloc susceptible d'être obtenu par le procédé tel que décrit dans le premier aspect de la présente invention comprenant

- au moins un bloc de polyamide aliphatique, en particulier semi-cristallin, et
- au moins un bloc de polyamide semi-aromatique, notamment semi-cristallin ou amorphe.

Tout particulièrement le co-polyamide est linéaire.

La présente invention concerne un procédé de préparation d'un co-polyamide semi-cristallin comprenant au moins un bloc aliphatique et au moins un bloc semi-aromatique, ledit procédé comprend au moins les étapes suivantes :

- mélanger au moins un polyamide aliphatique et au moins un polyamide semi-aromatique,
- chauffer le mélange de manière à ce que les polyamides soient fondus et que la réaction de polycondensation puisse avoir lieu entre les polyamides,
- récupérer le co-polyamide comprenant au moins un bloc aliphatique et au moins un bloc semi-aromatique, ledit polyamide semi-aromatique consistant en

  - un diacide aromatique contenant au moins une fonction de type alcool et/ou sulfonate, combiné avec une seule diamine, ou
  - une diamine aromatique contenant au moins une fonction du type alcool et/ou sulfonate, combiné avec un seul diacide;

dans lequel le mélange comprend un catalyseur de polycondensation,
la durée de l'étape de polycondensation est inférieure à 10 minutes,
la température à laquelle la réaction de polycondensation est effectuée est supérieure à la température de fusion la plus haute des polyamides présents (Thf),
et les blocs présentent une taille moyenne d'au moins 3 unités de répétition, cette taille moyenne est mesurée par RMN comme définie ci-après dans la description.

Durant l'étape de polycondensation des réactions d'échanges, telles que l'amidolyse, l'acidolyse et l'aminolyse peuvent avoir lieu. Ces réactions peuvent conduire à une hydrolyse des co-polyamides blocs et *in fine* conduire à des copolymères statistiques. Il est donc souhaitable de limiter ces réactions, notamment par des temps de réaction rapides et des durées de réaction limitées.

La température à laquelle est effectuée la réaction de polycondensation est supérieure à la température de fusion la plus haute des polyamides présents, ou Tfh, c'est-à-dire des destinés à condenser pour former le copolymère.

Selon un mode de réalisation particulier de la présente invention la température à laquelle est effectuée cette étape peut en particulier aller de la température de fusion la plus haute à la température de fusion la plus haute plus 80°C, notamment de Tfh+20°C à Tfh+80°C, et en particulier de Tfh+25°C à Tfh+50°C.

Selon la présente invention l'étape de polycondensation est effectuée sur une durée moins de 10 minutes, et tout particulièrement moins de 6 minutes. D'autre part, cette étape peut durer au moins 2 minutes, notamment au moins 2,5 minutes. Cette étape de polycondensation peut donc être effectuée sur une période de temps allant de 2 à moins de 10 minutes et en particulier de 2,5 à 6 minutes.

Selon la présente invention le mélange comprend aussi un catalyseur de polycondensation.

Comme notamment des catalyseurs phosphorés. Celui-ci peut notamment être choisi parmi l'acide phosphoreux, l'acide phosphorique et l'hypophosphite de sodium, en particulier l'hypophosphite de sodium. Ce catalyseur peut être présent en une teneur allant de 50 à 200 ppm, notamment de 70 à 120 ppm en poids par rapport au poids total des polyamides aliphatiques et semi-aromatiques de départ.

Selon la présente invention l'étape de polycondensation est effectuée en fondu, c'est-à-dire à une température supérieure ou égale à la température de fusion la plus haute des polyamides que l'on souhaite co-polycondenser. Tout particulièrement, cette étape est effectuée par extrusion réactive. Ceci peut permettre notamment de préparer de co-polymères blocs et de limiter les réactions d'hydrolyse, et donc de limiter les coupures / formation de liaisons qui conduisent *in fine* à un polymère statistique.

Les chaines des polyamides aliphatiques et semi-aromatiques sont terminées par des fonctions capables de réagir ensemble, notamment des fonctions acides et aminés. Les fonctions acides terminales peuvent être, en tout ou partie, sous une forme « activée » telles que chlorure d'acyle ou anhydride. Les fonctions amines terminales sont en particulier des amines primaires.

Le polyamide aliphatique peut comprendre, voire consister, en unités de répétitions provenant de diamines, de diacides et/ou d'aminoacides, en particulier les unités de répétition sont des diacides et des diamines, et tout particulièrement un couple diacide/diamine.

Selon un mode de réalisation particulier de la présente invention les diamines aliphatiques peuvent être du type $H_2N-R_1-NH_2$ dans lequel $R_1$ est un radical aliphatique comprenant au moins 2 atomes de carbone, en particulier au moins 4 atomes de carbone, tout particulièrement au moins 6 atomes de carbone. $R_1$ peut également comprendre au plus 12 atomes de carbone. Les deux fonctions amines peuvent être séparées par au moins 6 atomes de carbones, voire au moins 6 atomes de carbone. Les diamines aliphatiques peuvent être des diamines aliphatiques linéaires, comme du 1,10-diaminodécane ; ramifiées, comme du 2-méthyl-1,6-diaminohexane ; ou cycliques, comme les di(aminométhyl) cyclohexanediamines.

Les diamines aliphatiques peuvent notamment être choisies parmi l'hexaméthylène diamine, la butane diamine, la 2-méthyl pentaméthylène diamine, la 2-méthyl hexaméthylène diamine, la 3-méthyl hexa-méthylène diamine, la 2,5-diméthyl hexaméthylène diamine, la 2,2-diméthylpentaméthylène diamine, la nonane diamine, la 5-méthylnonane diamine, la dodécaméthylène diamine, la 2,2,4-triméthyl hexaméthylène diamine et/ou la 2,4,4-triméthyl hexaméthylène diamine, la 2,2,7,7-tétraméthyl octaméthylène diamine, l'isophorone diamine, et le diaminodicyclohexyl méthane. Tout particulièrement, la diamine aliphatique est l'hexaméthylène diamine.

Selon un mode de réalisation particulier de la présente invention les diacides aliphatiques peuvent être du type $HOOC-R_2-COOH$ dans lequel $R_2$ est un radical aliphatique comprenant au moins 2 atomes de carbone, en particulier au moins 4 atomes de carbone, tout particulièrement au moins 6 atomes de carbone. $R_2$ peut également comprendre au plus 12 atomes de carbone. Les deux fonctions acides peuvent être séparées par au moins 6 atomes de carbones, voire au moins 6 atomes de carbone. Le radical aliphatique peut être linéaire, ramifié ou cyclique.

Les diacides aliphatiques peuvent être choisis parmi l'acide glutarique, l'acide adipique, l'acide subérique, l'acide sébacique, l'acide dodécanedioïque, l'acide 1,2-cyclohexane dicarboxylique, l'acide 1,3-cyclohexane dicarboxylique, l'acide 1,2-cyclohexane diacétique et l'acide 1,3-cyclohexane diacétique. En particulier il s'agit d'acide adipique.

Selon un mode de réalisation particulier de la présente invention lorsque le polyamide aliphatique comprend, voire consiste, en unités de répétitions provenant d'aminoacides aliphatiques, ceux-ci peuvent être du type $H_2N-R_3-COOH$, dans lequel $R_3$ est un radical aliphatique comprenant au moins 2 atomes de carbone, en particulier au moins 4 atomes de carbone, tout particulièrement au moins 6 atomes de carbone. $R_3$ peut également comprendre au plus 18 atomes de carbone, notamment au plus 12 atomes de carbone. Le radical aliphatique peut être linéaire, ramifié ou cyclique. En particulier les aminoacides ou les lactames peuvent être choisis parmi le caprolactame, l'acide amino-undécanoïque, le lauryllactame et les mélanges de ceux-ci.

Dans le cas où le polyamide aliphatique provient d'amino-acides ou de lactames, il est avantageux de provoquer un déséquilibre GTA/GTC, notamment par réaction avec des bloqueurs de chaînes, par exemple des monoamines pour bloquer les fonctions acides ou des monoacides pour bloquer les fonctions aminés.

Dans le cas où le polyamide aliphatique comprend des diamines et des diacides, il est également avantageux de provoquer un déséquilibre GTA/GTC, notamment par un excès de diamine ou de diacides, et/ou par addition de bloqueurs de chaines.

Le polyamide aliphatique peut comprendre au moins un polyamide choisi parmi les polyamides suivants PA6, PA11, PA12, PA46, PA66, PA610, PA612, PA106, PA1010, PA1012, PA126, PA1210 et PA1212, et tout particulièrement parmi PA6, PA11, PA12, PA66, PA610, PA612, PA106, PA1010, PA1012, PA126, PA1210 et PA1212.

Selon un mode de réalisation particulier, le polyamide aliphatique peut être constitué d'un seul aminoacide et/ou d'un seul couple diamine-diacide. Tout particulièrement, le polyamide aliphatique est composé d'hexaméthylène diamine et d'acide adipique, soit du PA66.

Selon un autre mode de réalisation, le polyamide comprend au moins deux aminoacides et/ou au moins deux couples diamine-diacide, c'est-à-dire au moins deux diacides et une diamine ou un diacide et deux diamines.

En particuliers les polyamides utilisées dans ce procédé sont stables jusqu'à au moins 350°C, en particulier par mesure par analyse thermogravimétrique ATG.

Les polyamides aliphatiques peuvent présenter une masse moléculaire en poids Mw supérieure ou égale à 20000. Il peut présenter une masse moléculaire en poids allant de 10000 à 50000 g/mol, et notamment allant de 20000 à 40000 g/mol.

Avantageusement, le polyamide aliphatique est semi-cristallin. Il peut alors présenter :

- un taux de cristallinité, ou Xc, d'au moins 25 %, notamment allant de 30 à 40 %,
- une température de transition vitreuse, ou Tg, supérieure ou égale à 60°C, et/ou
- une température de fusion, ou Tf, supérieure ou égale à 250°C, notamment allant de 250 à 300°C.

Le polyamide semi-aromatique consiste en unités de répétitions provenant d'un diacide aromatique contenant au moins une fonction du type alcool et/ou sulfonate, combiné avec une seule diamine ou une diamine aromatique contenant au moins une fonction du type alcool et/ou sulfonate, combinée avec un seul diacide.

La diamine peut être aliphatique et le diacide aromatique ou la diamine peut être aliphatique et le diacide aromatique.

Les diacides aliphatiques et les diamines aliphatiques peuvent être tels que définies ci-dessus, dans le cadre du bloc polyamide aliphatique.

Selon un mode de réalisation particulier de la présente invention les diacides aromatiques comprennent au moins 8 atomes de carbone, et selon la présente invention le diacide aromatique, quand il est présent dans le polyamide semi-aromatique, comprend au moins une fonction de type alcool et/ou sulfonate. Parmi les diacides on peut citer l'acide téréphtalique, l'acide isophtalique, l'acide 2-hydroxytéréphtalique, l'acide 5-hydroxyisophtalique, l'acide 4-hydroxyisophtalique, l'acide 2,5-dihydroxytéréphtalique, l'acide sodium 5-sulfoisophtalique, ou AISNa, l'acide lithium 5-sulfoisophtalique, ou AISLi, et l'acide potassium 5-sulfoisophtalique, ou AISK.

Les diamines aromatiques peuvent notamment comprendre au moins 8 atomes de carbone, et selon la présente invention le diamine aromatique, quand elle est présente dans le polyamide semi-aromatique, comprend au moins une fonction de type alcool et/ou sulfonate. Parmi les diamines aromatiques on peut citer le m-xylylène diamine, ou MXD, et la 5-hydroxy-m-xylylène diamine.

Dans le cas où le polyamide semi-aromatique comprend un diacide aromatique :

- le diacide peut être choisi parmi l'acide téréphtalique, l'acide isophtalique, l'acide 2-hydroxytéréphtalique, l'acide 5-hydroxyisophtalique, l'acide 4-hydroxyisophtalique, l'acide 2,5-dihydroxytéréphtalique, et/ou
- la diamine peut être choisie parmi l'hexaméthylène diamine, la butane diamine, la 2-méthyl pentaméthylène diamine, la 2-méthyl hexaméthylène diamine, la 3-méthyl hexa-méthylène diamine, la 2,5-diméthyl hexaméthylène diamine, la 2,2-diméthylpentaméthylène diamine, la nonane diamine, la 5-méthylnonane diamine, la dodécaméthylène diamine, la 2,2,4-triméthyl hexaméthylène diamine et/ou la 2,4,4-triméthyl hexaméthylène diamine, la 2,2,7,7-tétraméthyl octaméthylène diamine, l'isophorone diamine, et le diaminodicyclohexyl méthane.

Le polyamide semi-aromatique selon un mode de réalisation particulier de la présente invention consiste d' un diacide aromatique, combinée avec une seule diamine.

Dans le cas où le polyamide semi-aromatique comprend une diamine aromatique :

- le diacide peut être choisi parmi l'acide glutarique, l'acide adipique, l'acide subérique, l'acide sébacique, l'acide dodécanedioïque, l'acide 1,2-ou 1,3-cyclohexane dicarboxylique, l'acide 1 ,2-ou 1,3-cyclohexane diacétique, et/ou
- la diamine peut être choisie parmi le m-xylylène diamine, ou MXD, et le 5-hydroxy m-xylylène diamine.

Le polyamide semi-aromatique selon un mode de réalisation particulier de la présente invention consiste d' une diamine aromatique, combinée avec un seul diacide.

Tout particulièrement, le polyamide semi-aromatique est semi-cristallin. Dans ce cas il peut s'agir d'un bloc MXD6 ou PA6T, soit un polyamide hexaméthylène diamine et acide téréphtalique.

Les polyamides semi-aromatiques semi-cristallins peuvent présenter une masse moléculaire en poids supérieur ou égal à 10000 g/mol, et en particulier allant de 10000 à 35000 g/mol.

Le polyamide semi-aromatique semi-cristallin peut présenter :

- un taux de cristallinité d'au moins 10 %, notamment allant de 10 à 30 %,
- une Tg supérieure ou égale à 60°C, notamment supérieure à 100°C, et en particulier allant de 100 à 170 °C, et/ou
- une Tf supérieure ou égale à 250°C, notamment allant de 250 à 300°C.

Selon un mode de réalisation particulier, le polyamide semi-aromatique est amorphe. Dans ce cas il peut s'agir de PA6HIA, soit un polyamide hexaméthylènediamine acide 5-hydroxyisophtalique, de PA6I, soit un polyamide hexaméthylènediamine acide isophtalique, ou de PANDT/INDT, c'est-à-dire un polyamide 2,2,4/2,4,4-triméthyl-hexaméthylènediamine et acide téréphtalique. Dans le cas où le polyamide semi-aromatique est amorphe, il peut présenter une Tg supérieure ou égale à 100°C, et notamment allant de 100 à 170°C.

Dans le cas d'un polyamide semi-aromatique amorphe, la masse moyenne en poids, Mw, de celui-ci dans le co-polyamide peut être inférieur ou égale à 15000 g/mol, voire à 13 000 g/mol.

La teneur en polyamides semi-aromatiques peut être inférieure ou égale à 25 % en poids, notamment inférieure ou égale à 20 % en poids par rapport au poids total de polyamide. Elle peut être supérieure ou égale à 5 % en poids, notamment supérieure ou égale à 8 % en poids par rapport au poids total du co-polyamide.

Tout particulièrement, lorsque les polyamides aliphatiques présentent une GTC > GTA, les polyamides semi-aromatiques présentent une GTA > GTC, et vice-versa. Ceci peut notamment permettre d'améliorer la co-polycondensation entre ces polyamides. L'utilisation de polyamides aliphatiques terminés amines avec des polyamides semi-aromatiques terminés acides, ou vice-versa, peut permettre de d'augmenter les réactions de couplages et de diminuer les réactions d'échanges. En particulier, le polyamide aliphatique présente une |GTA-GTC| supérieure ou égale à 150 meq/kg, notamment supérieure ou égale à 180 meq/kg, en particulier supérieure ou égale à 220 meq/kg, tout particulièrement supérieure ou égale à 260 meq/kg, encore plus particulièrement supérieure ou égale à 300 meq/kg, voire supérieure ou égale à 320 meq/kg.

En particulier, le polyamide semi-aromatique présente une |GTA-GTC| supérieure ou égale à 40 meq/kg, notamment supérieure ou égale à 50 meq/kg, en particulier supérieure ou égale à 60 meq/kg, tout particulièrement supérieure ou égale à 60 meq/kg, encore plus particulièrement supérieure ou égale à 65 meq/kg, voire supérieure ou égale à 70 meq/kg,

Les GTA et GTC représentent la concentration des groupes terminaux amines et acides carboxyliques par kg de polyamide. Ils sont déterminés par solubilisation du polyamide dans le TFE/CHCl$_3$, puis les fonctions amines sont mesurées par dosage potentiométrique avec l'HCl alors que les fonctions carboxyliques sont dosées par dosage en retour après l'addition de la Base TBOH.

Dans les cas où le polyamide n'est pas soluble dans le solvant permettant cette mesure, le GTA et le GTC est mesuré par RMN. Une telle méthode est définie dans les exemples.

Les polyamides utilisés peuvent présenter une teneur en eau limitée, notamment inférieure à 1000 ppm, en particulier inférieure à 500 ppm mesurée par la méthode de titration Karl Fischer. En particulier les mesures sont effectuées sur des polyamides secs, c'est-à-dire présentant une teneur en eau inférieure à 500 ppm.

Le procédé peut comprendre une étape d'extrusion du co-polyamide, en particulier sous forme de granulés.

Le procédé peut encore comprendre une étape de refroidissement, notamment après extrusion du co-polyamide.

Selon un mode de réalisation particulier, le procédé comprend :

- une étape de polycondensation pendant une durée allant de 2 à moins de 10 minutes,
- un catalyseur de polycondensation choisi parmi l'acide phosphoreux, l'acide phosphorique ou l'hypophosphite de sodium,
- un polyamide aliphatique, en particulier tel que défini ci-dessus, présentant une |GTA-GTC| supérieure ou égale à 150 meq/kg,
- un polyamide semi-aromatique, en particulier tel que défini ci-dessus, présentant une |GTA-GTC| supérieure ou égale à 40 meq/kg, et/ou
- permettant d'obtenir un co-polyamide bloc tel que défini ci-dessous.

Le co-polyamide bloc est semi-cristallin. En particulier dans le cas où il comprend un ou des blocs semi-aromatiques amorphes, le co-polyamide peut présenter un taux de cristallinité supérieur ou égal à 20 %. En général, ce taux de cristallinité peut aller de 20 à 50 %. Tout particulièrement dans le cas où le polyamide semi-aromatique est amorphe, le co-polyamide présente une cristallinité d'au moins 90%, notamment d'au moins 95%, voire d'au moins 98%, par rapport à celle du polyamide aliphatique semi-cristallin. Par exemple dans le cas d'un polyamide aliphatique de type PA66 (dont la Xc est de 33%) la cristallinité du co-polyamide peut être supérieure ou égale à 29,7, notamment à 31,35, voire à 32,34.

Par ailleurs, il peut présenter la structure cristalline du co-polyamide peut être du même type que celle du polyamide aliphatique semi-cristallin. Par exemple dans le cas où le polyamide aliphatique est du PA66, le copolyamide peut présenter des structures sphérulite et lamellaire.

Tout particulièrement, le co-polymère bloc est linéaire.

Le co-polyamide bloc peut comprendre uniquement des unités de répétition de type polyamide. Les blocs présents dans le co-polyamide bloc sont en particulier tels qu'obtenus par le procédé défini ci-dessus.

Par conséquent la nature des monomères de ces blocs correspond à la définition des monomères des polyamides aliphatiques et semi-aromatiques utilisés dans le procédé selon l'invention, en particulier tels que définis ci-dessus.

Le co-polyamide comprend au moins un bloc polyamide aliphatique. Il peut comprendre au moins deux, notamment au moins trois, en particulier au moins quatre, voire au moins cinq blocs polyamide aliphatique. Ces blocs peuvent être identiques ou différents. Avantageusement tous les blocs polyamides aliphatiques sont identiques, c'est-à-dire comprennent les mêmes unités de répétition.

Les blocs polyamides aliphatiques peuvent comprendre, en moyenne, au moins 8 unités de répétition, en particulier au moins 14 unités de répétition, tout particulièrement au moins 18 unités de répétition, voire au moins 20 unités de répétition, tout particulièrement au moins 30 unités de répétition, voire au moins 40 unités de répétition. Le nombre d'unités de répétition peut être mesuré par RMN, ainsi que décrit dans les exemples.

Les blocs polyamides aliphatiques peuvent ainsi présenter chacun une masse molaire moyenne en poids, Mw, supérieure ou égale à 1800 g/mol, notamment supérieure ou égale à 3100 g/mol, en particulier supérieure ou égale à 4500 g/mol, voire supérieure ou égale à 7500 g/mol,

Le co-polyamide selon l'invention comprend au moins un bloc polyamide semi-aromatique(s). Il peut comprendre au moins deux, notamment au moins trois, en particulier au moins quatre, voire au moins cinq blocs polyamide aliphatique. Ces blocs peuvent être identiques ou différents. Avantageusement tous les blocs polyamides semi-aromatiques sont identiques, c'est-à-dire comprennent les mêmes unités de répétition.

En particulier dans le cas où le bloc polyamide semi-aromatique est amorphe, il peut présenter une masse molaire moyenne en poids, Mw, inférieur ou égale à 7000 g/mol, notamment inférieure ou égale à 5000 g/mol. En particulier il peut présenter une masse molaire moyenne en poids allant de 3000 à 6500 g/mol, voire de 3500 à 5000 g/mol.

Les blocs polyamide semi-aromatique, en particulier amorphes, peuvent présenter une taille moyenne supérieure ou égale à 4 unités de répétitions. Ils peuvent également présenter une taille moyenne inférieure ou égale à 10 unités de répétition.

Dans le cas où le bloc polyamide semi-aromatique est semi-cristallin sa masse molaire moyenne en poids, Mw, peut aller de 3500 à 15000 g/mol.

Selon le présente invention le diacide aromatique, quand il est présent dans le polyamide semi-aromatique, porte au moins une fonction choisie parmi alcool et sulfonate, notamment tels que définis ci-dessus. Ces monomères peuvent en particulier être des monomères aromatiques, tout particulièrement tels que définis ci-dessus, et encore plus particulièrement de type HIA ou AISLi.

Le co-polyamide peut comprendre une teneur en bloc(s) semi-aromatique(s), en particulier lorsque le bloc semi-aromatique est amorphe, inférieure ou égale à 25 % en poids, notamment inférieure ou égale à 20 % en poids par rapport au poids total du copolymère. La teneur en blocs semi-aromatique peut être supérieure ou égale à 5 % en poids, notamment supérieure ou égale à 8 % en poids par rapport au poids total du co-polyamide.

Le co-polyamide peut présenter une masse moléculaire en poids, Mw, supérieure à 40 000 g/mol, notamment supérieur ou égale à 65 000 g/mol, en particulier supérieur ou égale à 65 000 g/mol. En particulier, la masse moléculaire en poids peut aller de 70 000 à 120 000 g/mol.

Les polyamides linéaires présentent un comportement pseudo-plastiques, c'est-à-dire que leur viscosité $\eta$ (éta), mesurée à 280°C, en fonction du taux de cisaillement montre un plateau Newtonien à faible cisaillement (<200 $s^{-1}$) puis une diminution de la viscosité avec l'augmentation du taux de cisaillement.

Les co-polymères selon l'invention, en particulier le PA66/6HIA, présentent une viscosité $\eta$ à faible taux de cisaillement (<200 $s^{-1}$) environ 10 fois supérieure à celles du PA66. En revanche, lorsque le taux de cisaillement augmente, la différence de viscosité $\eta$ entre le co-polymère et le PA aliphatique linéaire correspondant, notamment PA66, diminue. Par exemple dans le cas du PA66/6HIA la viscosité $\eta$ à 3000 $s^{-1}$ n'est plus que 1,5 à 3 fois supérieure à celle du PA66.

Ainsi, les co-polymères selon l'invention sont très intéressants d'un point de vue mise en oeuvre puisqu'ils présentent une différence de viscosité selon le cisaillement encore plus prononcée que les polyamides classiques, en particulier que le PA66. Ceci permet une mise en oeuvre facilité dans des procédés aussi différents que l'injection et l'extrusion soufflage (ou « blow-moulding »).

Selon un de ses aspects, l'invention a pour objet l'utilisation de co-polymère bloc selon l'invention en tant que :

-   agent augmentant la différence des viscosités $\eta$ d'une composition polymérique, en particulier polyamide, en fonction des vitesses de cisaillement, en particulier par rapport au PA66, tout particulièrement mesurée de la manière définie dans les exemples,

- agent améliorant la résistance au choc d'une composition polymérique, et en particulier polyamide, ledit choc pouvant être le choc Charpy, tout particulièrement mesurée de la manière définie dans les exemples,
- agent améliorant l'imperméabilité d'une composition polymérique, et en particulier polyamide, ladite imperméabilité pouvant être l'imperméabilité à l'éthanol, tout particulièrement mesurée de la manière définie dans les exemples, et/ou
- agent améliorant la durée de vie en fatigue d'une composition polymérique, et en particulier polyamide, ladite durée de vie fatigue pouvant être mesurée de la manière définie dans les exemples.

L'invention concerne également une composition comprenant un co-polyamide bloc, cette composition peut notamment être sous forme de granulés.

Selon une variante, la composition comprend en tant que polymère, et notamment en tant que polyamide, uniquement un ou plusieurs copolyamide(s) bloc(s) selon l'invention.

Selon une autre variante, la composition comprend en tant que polymère un ou plusieurs co-polyamide(s) bloc(s) selon l'invention, et au moins un autre polymère thermoplastique, en particulier au moins un polyamide aliphatique et/ou semi-aromatique, notamment tels que définis ci-dessus, et plus particulièrement de type PA6 et/ou PA66.

Tout particulièrement, la composition comprend en tant que polymère uniquement un co-polyamide bloc selon l'invention et au moins un polyamide aliphatique et/ou semi-aromatique, notamment tels que définis ci-dessus, et plus particulièrement de type PA6 et/ou PA66.

Le co-polyamide bloc selon l'invention peut être présent dans la composition en une teneur allant de 2 à 90 % en poids, notamment de 5 à 50 % en poids, voire de 10 à 30 % en poids par rapport au poids total de polymères présents dans la composition.

Le co-polyamide bloc selon l'invention peut être présent dans la composition en une teneur allant de 2 à 99 % en poids, notamment de 5 à 40 % en poids, voire de 10 à 25 % en poids par rapport au poids total de polyamides présents dans la composition.

La composition selon l'invention peut comprendre des charges de renfort et/ou de remplissages, comme par exemple des charges fibreuses et/ou des charges non fibreuses.

Comme charges fibreuses on peut citer les fibres de verre, les fibres de carbone, les fibres naturelles, les fibres d'aramides, et les nanotubes, notamment de carbone. On peut citer comme fibres naturelles le chanvre et le lin. Parmi les charges non fibreuses on peut notamment citer toutes les charges particulaires, lamellaires et/ou les nanocharges exfoliables ou non exfoliables comme l'alumine, le noir de carbone, les argiles alumino-silicates, les montmorillonites, le phosphate de zirconium, le kaolin, le carbonate de calcium, les diatomées, le graphite, le mica, la silice, le dioxyde de titane, les zéolites, le talc, la wollastonite, les charges polymériques telles que, par exemple, des particules de diméthacrylates, les billes de verre ou de la poudre de verre.

Il est possible que la composition comprenne plusieurs types de charges de renfort. De façon préférentielle, la charge la plus utilisée peut être les fibres de verres, du type dit « coupé » (en anglais « chopped »), notamment ayant un diamètre compris entre 7 et 14 $\mu$m. Ces charges peuvent présenter un ensimage surfacique qui assure l'adhésion mécanique entre les fibres et la matrice polyamide.

La concentration pondérale des charges de renfort ou de remplissage peut aller de 1 à 60 % en poids par rapport au poids total de la composition, notamment de 15 à 50 % en poids par rapport au poids total de la composition.

La composition peut comprendre tout type d'agents ignifugeants, c'est à dire des composés permettant de diminuer la propagation de la flamme et/ou ayant des propriétés d'ignifugation, bien connus de l'homme du métier. Ces agents ignifugeants sont habituellement utilisés dans des compositions ignifugées et sont notamment décrits, par exemple, dans les brevets US6344158, US6365071, US621 1402 et US6255371, cités ici à titre de référence. Avantageusement, le système d'ignifugation comprend au moins un agent ignifugeant choisi parmi le groupe comprenant :

- les agents ignifugeants contenant du phosphore, tels que :

  + les oxydes de phosphines comme par exemple l'oxyde de triphénylphosphine, l'oxyde de tri-(3-hydroxypropyl) phosphine et l'oxyde de tri-(3-hydroxy-2-méthylpropyl) phosphine,
  + les acides phosphoniques ou leurs sels ou les acides phosphiniques ou leurs sels, tels que par exemple les sels d'acides phosphiniques de zinc, de magnésium, de calcium, d'aluminium, ou de manganèse, notamment le sel d'aluminium de l'acide diéthylphosphinique ou le sel de zinc de l'acide diméthylphosphinique,
  + les phosphonates cycliques, tels que les esters de diphosphate cyclique tel que par exemple l'Antiblaze 1045,
  + les phosphates organiques, tels que le triphénylphosphate,
  + les phosphates inorganiques, tels que les polyphosphates d'ammonium et les polyphosphates de sodium,
  + le phosphore rouge, qu'il soit par exemple sous forme stabilisé ou revêtu, en poudre ou sous forme de masterbatches,

- les agents ignifugeants de type composés organiques azotés tels que les triazines, l'acide cyanurique et/ou isocyanurique, la mélamine ou ses dérivés comme le cyanurate de mélamine, l'oxalate, le phtalate, le borate, le sulfate, le phosphate, polyphosphate et/ou pyrophosphate de mélamine, les produits condensés de la mélamine, tel que la mélem, la mélam et le mélon, le tris(hydroxyéthyl) isocyanurate, la benzoguanamine, la guanidine, l'allantoïne, et le glycoluril,

- les agents ignifugeants contenant des dérivés halogénés, tels que

+ les dérivés du brome tels que par exemple les PBDPO (polybromodiphényloxydes), le BrPS (polystyrène bromé et polybromostyrène), le poly(pentabromobenzylacrylate), l'indane bromé, le tétradécabromodiphénoxybenzène (Saytex 120), l'éthane-1,2-bis(pentabromophényl) ou Saytex 8010 d'Albemarle, le tétrabromobisphénol A et les oligomères époxy bromés. Notamment parmi les dérivés bromés, nous pouvons citer le polydibromostyrène tel que le PDBS-80 de Chemtura, les polystyrènes bromés tels que le Saytex HP 3010 d'Albemarle ou le FR-803P de Dea Sea Bromine Group, le décabromodiphényléther (DBPE) ou FR-1210 de Dea Sea Bromine Group, l'octabromodiphényléther (OBPE), le 2,4,6-Tris(2,4,6- tribromophénoxy)-1,3,5 triazine ou FR-245 de Dead Sea Bromine Group, le Poly(pentabromobenzylacrylate) ou FR-1025 de Dead Sea Bromine Group et les oligomères ou polymères à terminaisons époxy du tétrabromobisphénol-A comme tels que les F-2300 et F2400 de Dead Sea Bromine Group,

+ les composés chlorés, tel que par exemple un composé cycloaliphatique chloré comme le Dechlorane plus(R) (vendu par OxyChem, voir CAS 13560-89-9).

Ces composés peuvent être utilisés seuls ou en combinaison, parfois synergique. On préfère notamment une association synergique de composés contenant du phosphore comme les oxydes de phosphines, les acides phosphoniques ou leurs sels ou les acides phosphiniques ou leurs sels, et les phosphonates cycliques,avec des dérivés azotés tels que le mélam, le mélem, le phosphate de mélamine, les polyphosphates de mélamine, les pyrophosphates de mélamine ou les polyphosphates d'ammonium. On peut notamment utiliser comme agents synergiques les composés d'antimoine, les oxydes métalliques, et le borate de zinc.

La composition peut comprendre de 5 à 40 % en poids d'agents ignifugeants, par rapport au poids total de la composition.

La composition selon l'invention peut en outre comprendre des charges et/ou additifs classiquement utilisés pour la fabrication de compositions polyamides. Ainsi, on peut citer, les lubrifiants, les plastifiants, les agents nucléants, les agents modificateurs de chocs, les catalyseurs, les stabilisants lumières et/ou thermiques, les antioxydants, les antistatiques, les colorants, les matifiants, les additifs d'aide au moulage ou autres additifs conventionnels.

On peut notamment ajouter à la composition polyamide des agents modifiants la résistance aux chocs. Ce sont généralement des polymères d'élastomères qui peuvent être utilisés à cet effet. Les agents modificateurs de la résilience sont généralement définis comme ayant un module de traction ASTM D-638 inférieur à environ 500 MPa. Des exemples d'élastomères convenables sont les éthylène-ester acrylique-anhydride maléïque, les éthylène-propylène-anhydride maléïque, les éthylène-propylène-diène monomère (EPDM) avec éventuellement un anhydride maléïque greffé. La concentration pondérale en élastomère est avantageusement comprise entre 0,1 et 30 % par rapport au poids total de la composition.

On préfère notamment les agents modificateurs de chocs comprenant des groupements fonctionnels réactifs avec le polyamide. On peut par exemple citer les terpolymères d'éthylène, ester acrylique et glycidyl méthacrylate, les copolymères d'éthylène et de butyl ester acrylate, les copolymères d'éthylène, n-butyl acrylate et glycidyl méthacrylate, les copolymères d'éthylène et d'anhydride maléique, les copolymères styrène-maléïmides greffés avec de l'anhydride maléique, les copolymères styrène-éthylène-butylène-styrène modifié avec de l'anhydride maléique, les copolymère styrène-acrylonitrile greffés anhydrides maléiques, les copolymères acrylonitrile butadiène styrène greffés anhydrides maléiques, et leurs versions hydrogénées. La proportion en poids de ces agents dans la composition totale est notamment comprise entre 0,1 et 40 %.

Ces charges et additifs peuvent être ajoutés au polyamide modifié par des moyens usuels adaptés à chaque charge ou additif. Les matériaux et compositions de l'invention sont généralement obtenus par mélange des différents constituants à chaud, par exemple dans une extrudeuse mono ou bivis, à une température suffisante pour maintenir la résine polyamide en milieu fondu, ou a froid dans un mélangeur mécanique notamment.

Généralement, le mélange obtenu est extrudé sous forme de joncs qui sont coupés en morceaux pour former des granulés. Les composés peuvent être ajoutés à n'importe quel moment du processus de fabrication du matériau plastique, notamment par mélange à chaud ou à froid avec la matrice plastique. L'addition des composés et des additifs peut être réalisée par ajout de ces composés dans la matrice plastique fondue sous forme pure ou sous forme de mélange concentré dans une matrice telle que par exemple une matrice plastique.

La composition est préférentiellement une composition à mouler, par exemple sous forme de granulés ou de poudre, servant notamment à la fabrication d'articles par un procédé de moulage par injection. La composition selon l'invention peut être utilisée pour tout procédé de mise en forme des matières plastiques, tels que par exemple les procédés de moulage, notamment le moulage par injection, le rotomoulage, le frittage, la coulée, ou d'extrusion comme l'extrusion soufflage et le filmage. L'invention concerne ainsi aussi des procédés de fabrication d'articles moulés ou extrudés par mise en forme d'une composition de l'invention.

Par ailleurs, la composition de co-polyamide utilisée dans le procédé de fabrication d'articles est avantageusement séchée avant mise en forme, notamment afin de présenter une teneur en eau inférieure ou égal à 1000 ppm, en particulier à 500 ppm.

L'invention a donc encore pour objet un procédé de fabrication d'un article comprenant la mise en forme de la composition, en particulier par moulage, notamment moulage par injection, rotomoulage, frittage, coulée, ou extrusion comme l'extrusion soufflage et le filmage. La composition étant en particulier sous forme de granulés.

Ce procédé peut comprendre une étape de post-traitement de l'article, notamment de séchage pendant 12 h à 110°C sous vide, suivi d'un refroidissement lent, notamment en laissant revenir à température ambiante. Ceci peut en particulier être effectué dans le cas d'articles destinés à faire l'objet de mesures.

Les exemples suivants sont fournis à titre illustratif de l'invention.

## EXEMPLES

### Exemple 1 selon la présente invention: Co-polyamide PA66/6HIA 90/10

Les caractéristiques présentées ci-après ont été mesurés avec les techniques suivantes :

DSC : Tc, $\Delta$Hc, Tf, $\Delta$Hm, Xc$_{[PA66]}$

Les propriétés thermiques (température de fusion et de cristallisation, Xc) ont été déterminées en DSC classique à l'aide d'une TA Q2000 calorimètre. Les échantillons prélevées à partir des granulés ou des éprouvettes (8mg) sont placés dans une capsule non hermétique sous balayage d'azote, puis un balayage en température de 25°C jusqu'à 290°C selon une rampe de température de 10°C/min a été faite pour mesurer la Tf. Apres la fusion une rampe de refroidissement de 290°C jusqu'à 25°C a été réalisé pour déterminer la Tc.

GPC : Mn, Mw, Mz

L'échantillon prélevé au à partir d'une éprouvette ou d'un granule (qlq mg) est dissout dans un mélange Dichlorométhane/ Anhydride Trifluoroacétique (DCM/ATFA 95:5 v/v). Après 4 heures d'agitation à température ambiante, la solution est filtrée avec un filtre de $0.2\mu$m puis injecté dans la colonne de l'appareil PL GPC 120 (4 colonnes PLGEL MIXTE C de 60 cm avec des particules de 5 $\mu$m). Le débit d'élution est fixé à 1ml/min. La détection à la sortie de la colonne était faite avec un réfractomètre et un détecteur UV2000 spectre.

RMN : longueur moyenne des chaînes (L$_{PA66}$ et LPA$_{6HIA}$)

Les analyses RMN $^{13}$C NMR ont été réalisées sur un spectromètre Bruker AV500 à 300°K en utilisant comme solvant l'Hexafluoroisopropanol deutéré. Le spectre $^{13}$C a été enregistrée selon les paramètres suivantes: Fréquence de 125,76 MHz, largeur de balayage 261,5 ppm et temps d'acquisition de 2 s. la largeur de pulse 9 $\mu$s et un retard de 3 pour 8200 accumulations.

Les analyses de la longueur de bloc ont été déterminées à partir de l'aire de pic correspondant au carbone de l'amine situé en position alpha de la fonction amide. On désigne par (BB and BA) les deux carbones de la diamine relié au diacide aliphatiques et par (AA and AB) ceux de la diamine reliée au diacide aromatique.

La longueur moyenne de chaque bloc est calculée suivant la formule suivante :

$$L_{PA66} = 1/P_{BA} = ([BB]/[BA])+1 = (I_{BB}/2I_{BA})+1$$

$$L_{PA6HIA} = 1/P_{AB} = (I_{AA}/2I_{AB})+1$$

où

$P_{BA}$ représente la probabilité de trouver un hexaméthylène diamine suivi par un acide adipique ($P_{BA}$= [BA]/([BB]+[BA]),

$P_{AB}$ représente la probabilité de trouver un hexaméthylène diamine suivi par un acide hydroxyisophtalique ($P_{AB}$= [AB]/([AA]+[AB]), et

I représente les intensités du signal RMN.

RMN : mesure GTA/GTC lorsque la mesure classique n'est pas utilisable

La RMN a été effectuée dans un solvant deutérés solubilisant le PA6HIA (en l'occurrence DCOOC). Puis les déplacements chimiques de protons caractéristiques des motifs suivants ont été intégrés :

- (1H) motif HIA en bout de chaine : int C
- (2H) motif amine (HMD) bout de chaine : int D
- (1H) HIA libre (déterminé à l'aide d'un ajout) : int E

Ensuite : $\mathbf{N_{HIAbout}}$ = int C ; $\mathbf{N_{HIAlibre}}$ = int E ; $\mathbf{N_{HMDbout}}$ = (intD)/2

Puis les GTA et GTC sont calculées suivant les relations suivantes :

$$GTA = (2000000/Mn) / [1 + (N_{HIAbout} + 2xNHIA_{libre}) / N_{HMDbout}]$$

$$GTC = (2000000/Mn) - GTA$$

Les composés utilisés sont les suivants :

Le PA66 présente un Mn de 10500 et une Mw de 35000. Il présente une GTA de 105 meq/kg et une GTC de 32,7 meq/kg.

Le PA6HIA présente une Mn de 6500 et une Mw de 13800. Il présente une GTC de 385 meq/kg et une GTC de 47 meq/kg.

L'hypophosphite de sodium est pur à 99 % et provient de chez Aldrich.

Les granulés de PA66 et de PA6HIA présentant une teneur en eau (Karl Fischer) allant de 300 à 400 ppm ont été utilisés.

Les dispositifs utilisés sont les suivants :

L'extrudeuse utilisée est une extrudeuse Leistritz comprenant deux vis en mode co-rotatifs d'un diamètre de 34 mm et un rapport Longueur sur diamètre L/D de 35. Le fourreau est composé de 8 zones de température contrôlée et la température a été réglée avec un gradient allant de 285°C dans la première zone jusqu'à 305°C dans la dernière zone, aboutissant à une température à l'état fondu de 308°C.

Le profil de vis, la vitesse de rotation et le débit ont été réglés afin d'avoir le temps de séjour nécessaire à la réaction de polycondensation (3 min). Le sortant de l'extrudeuse est tiré sous forme de jonc et rapidement refroidi dans l'eau afin d'obtenir un jonc solidifié. Celui-ci est ensuite mis sous forme de granulés.

Mode opératoire

Un mélange de granulés PA66 et de granulés PA6HIA présentant un ratio pondéral 90/10 et d'hypophosphite de sodium, 100 ppm en poids par rapport au poids total de la composition, est introduit dans l'extrudeuse dont la température a été réglée avec un gradient allant de 285°C dans la première zone jusqu'à 305°C dans la dernière zone, aboutissant à une température à l'état fondu de 308°C. Après une période de stabilisation de l'extrudeuse, estimée à 20-30 min, Le sortant de l'extrudeuse est tiré sous forme de jonc et rapidement refroidi dans l'eau afin d'obtenir un jonc solidifié. Celui-ci est ensuite mis sous forme de granulés afin d'être utilisé. Le temps de séjour des polymères à l'intérieur de l'extrudeuse a été d'environ 200 s, en l'occurrence obtenu via deux passages dans l'extrudeuse (chaque passage étant de 100 s).

Cela conduit au co-polyamide PA66/6HIA 90/10 présentant les caractéristiques suivantes :

Tc = 220,4°C ; ΔHc = 42,9 J/g ; Tf = 255°C ; ΔHm = 42,9 J/g ; $Xc_{[PA66]}$ = 33 %

Mn = 14800 g/mol ; Mw = 67500 g/mol ; Mz = 126500 g/mol ; Dispersité (Mw/Mn) = 4,5

Longueur moyenne des blocs PA66 environ 46 unités de répétition ; longueur moyenne des blocs PA6HIA environ 5,11 unités de répétition

Par ailleurs le co-polymère bloc présente la même structure sphérulite (observation par microscopie optique à polarisation croisée, POM) et lamellaire (observation par microscopie électronique à transmission, TEM) que celle du PA66.

En outre, ce co-polymère présente une viscosité $\eta$ à faible taux de cisaillement (<200 s$^{-1}$) environ 10 fois supérieure à celles du PA66. En revanche, à fort taux de cisaillement (>2000 s$^{-1}$) viscosité $\eta$ de ce co-polymère est comparable à celle du PA66 (environ deux fois supérieure).

## Exemple comparatif 1 : PA66

Cet exemple reprend les conditions de l'exemple 1 mais en utilisant un mélange ayant un rapport pondéral PA66/PA6HIA de 100/0, c'est-à-dire uniquement du PA66.

Cela conduit au polyamide PA66 présentant les caractéristiques suivantes :

Tc = 216,2°C ; $\Delta$Hc = 42,9 J/g ; Tf = 255°C, $\Delta$Hm = 55,1 J/g ; Xc$_{[PA66]}$ = 33 %
Mn = 10500 g/mol ; Mw = 35000 g/mol ; Mz = 44500 g/mol ; Dispersité (Mw/Mn) = 3,3

Longueur moyenne des blocs PA66 d'environ 64,1 unités de répétition.

## Exemple 2 selon la présente invention: Co-polyamide PA66/6HIA 83/17

Cet exemple reprend les conditions de l'exemple 1 mais en utilisant un rapport pondéral PA66/PA6HIA de 83/17.

Cela conduit au co-polyamide PA66/6HIA 83/17 présentant les caractéristiques suivantes :
Tc = 220,4°C ; $\Delta$Hc = 42,9 J/g ; Tf = 255°C ; $\Delta$Hm = 42,9 J/g ; Xc$_{[PA66]}$ = 33,8 % Mn = 15900 g/mol ; Mw = 57000 g/mol ; Mz = 107000 g/mol ; Dispersité (Mw/Mn) = 3,5

Longueur moyenne des blocs PA66 environ 27,2 unités de répétition ; longueur moyenne des blocs PA6HIA environ 4,47 unités de répétition

Par ailleurs ce co-polymère bloc présente la même structure sphérulite (observation par microscopie optique à polarisation croisée, POM) et lamellaire (observation par microscopie électronique à transmission, TEM) que celle du PA66.

En outre, ce co-polymère présente une viscosité $\eta$ à faible taux de cisaillement (<200 s$^{-1}$) environ 10 fois supérieure à celles du PA66. En revanche, à fort taux de cisaillement (>2000 s$^{-1}$) viscosité $\eta$ de ce co-polymère est comparable à celle du PA66 (environ deux fois supérieure).

## Exemple 3 : résistance au choc Charpy

Des éprouvettes injectées de dimension 4*10*80 mm$^3$ sont d'abord séchées 1 nuit sous vide à 110°C, puis elles sont entaillées à mi-longueur sur une profondeur de 2 mm d'une entaille en V de rayon en fond d'entaille 0,1 mm. La résistance au choc Charpy est ensuite évaluée à l'aide d'un mouton pendule, qui donne la valeur d'énergie nécessaire pour casser l'éprouvette rapportée à la surface sous entaille (Résistance au choc R exprimée en kJ/m$^2$). Le mouton-pendule est équipé d'un marteau d'énergie 7.5 J, et la vitesse d'impact est de 1 m/s. Une reproductibilité de mesure sur 10 échantillons est réalisée. La caractérisation de la résistance au choc est réalisée dans un laboratoire régulé en température à 23°C et en hygrométrie à RH50.

Les essais ont été répétés 5 fois pour chaque niveau de contrainte à 25°C afin d'obtenir une statistique.

| | PA66 (Ex. Comp. 1) | PA66/6HIA 90/10 (Ex. 1) | PA66/6HIA 83/17 (Ex. 2) |
|---|---|---|---|
| Choc Charpy (kJ/m$^2$) | 3,33 | 4,3 | 4,4 |
| Variation | - | +30 % | +31% |
| (Ex.1) et (Ex.2) exemples selon la présente invention | | | |

## Exemple 4 : Perméabilité

Des disques injectés d'épaisseur de départ 3 mm sont d'abord désépaissies par usinage jusqu'à atteindre une épaisseur de 300 $\mu$m. Les échantillons sont ensuite séchés pendant une nuit sous vide à 110°C. La perméabilité à l'éthanol est ensuite mesurée : une des faces du film de 300 $\mu$m est mise en contact avec de l'éthanol anhydre à l'aide de coupelles de perméation en aluminium scellées de façon étanche, l'autre face étant en contact avec l'air ambiant. La masse de l'ensemble (coupelle+film+éthanol) est mesurée au cours du temps. Au bout d'un certain temps appelé temps d'induction, une perte de masse correspondant à la perméation de l'éthanol à travers le film de polymère est mesurée, et une valeur de perméabilité représentant cette perte de masse rapportée au temps, à la surface de film en contact avec l'air ambiant, et multipliée par l'épaisseur de film peut être établie (Perméabilité P exprimée en g.mm/m$^2$.J). Une reproductibilité de mesure sur 3 échantillons est réalisée. La perméabilité est mesurée à 40°C en plaçant les coupelles de perméation dans des étuves ventilées thermo-régulées 40°C. Les étuves ventilées étant placées dans une pièce régulée à 23°C à RH50, le degré d'hygrométrie dans l'étuve à 40°C est de 20%.

|  | PA66 (Ex. Comp. 1) | PA66/6HIA 90/10 (Ex. 1) | PA66/6HIA 83/17 (Ex. 2) |
|---|---|---|---|
| Perméabilité Ethanol 40°C (g.mm/m$^2$.j) | 5 | 3 | 2,2 |
| Diminution de la perméabilité | - | +60% | +127% |
| (Ex.1) et (Ex.2) exemples selon la présente invention | | | |

## Example 5 : Fatigue

Les essais de fatigue sont pilotés en contrainte avec une sollicitation sinusoïdale en mode traction-traction à une fréquence de 5Hz, le rapport de la contrainte minimale sur contrainte maximale vaut R=0,1. Tous les essais ont été réalisés dans une enceinte thermique sous atmosphère d'air.

La machine utilisée pour les essais mécaniques est une machine servohydraulique INSTRON 8872, capable de réaliser des essais pour polyamides avec une fréquence de 1à 10 Hz environ.

Les éprouvettes utilisées sont des éprouvettes de traction ISO527 de 4mm d'épaisseur, dans lesquelles, afin de concentrer les contraintes, un trou d'un mm de diamètre a été réalisé au centre de l'éprouvette, puis ces éprouvettes ont été séchées 1 nuit sous vide à 110°C.

Les mesures sont données dans le tableau suivant.

| Durée de vie fatigue | PA66 (Ex. Comp. 1) | PA66/6HIA 90/10 (Ex. 1) | PA66/6HIA 83/17 (Ex. 2) |
|---|---|---|---|
| 65 MPa 23°C (N) | 2754 | 10964 | 12022 |
| Amélioration | - | +298% | +336% |
| 45 MPa 23°C (N) | 323593 | 1288249 | 1445439 |
| Amélioration | - | +298% | +346% |
| (Ex.1) et (Ex.2) exemples selon la présente invention | | | |

## Revendications

1. Procédé de préparation en fondu de co-polyamide semi-cristallin comprenant au moins un bloc aliphatique et au moins un bloc semi-aromatique, ledit procède comprend au moins les étapes suivantes :

    - mélanger au moins un polyamide aliphatique et au moins un polyamide semi-aromatique, lesdits polyamides étant terminés par des fonctions capables de réagir entre elles,
    - chauffer le mélange de manière à ce que les polyamides soient fondus et qu'une réaction de polycondensation puisse avoir lieu entre les polyamides,
    - récupérer le co-polyamide comprenant au moins un bloc aliphatique et au moins un bloc semi-aromatique,

    ledit polyamide semi-aromatique consistant en

    - un diacide aromatique contenant au moins une fonction du type alcool et/ou sulfonate, combiné avec une seule diamine ou
    - une diamine aromatique contenant au moins une fonction du type alcool et/ou sulfonate, combinée avec un seul diacide;

dans lequel le mélange comprend un catalyseur de polycondensation,
la durée de l'étape de polycondensation est inférieure à 10 minutes, la température à laquelle la réaction de polycondensation est effectuée est supérieure à la température de fusion la plus haute des polyamides présents (Thf), et les blocs présentent une taille moyenne d'au moins 3 unités de répétition, cette taille moyenne est mesurée par RMN comme décrit dans la description.

2. Procédé selon la revendication 1, **caractérise en ce qu'**il est effectué par extrusion réactive.

3. Procédé selon la revendication 1 ou 2, **caractérise en ce que** la durée de l'étape de polycondensation est inférieure à 6 minutes.

4. procédé selon l'une quelconque des revendications 1 à 3, **caractérisé en ce que** la température à laquelle est effectuée l'étape de polycondensation va de la température de fusion la plus haute à la température de fusion la plus haute plus 80°C, notamment de Tfh+20°C à Tfh+80°C, et en particulier de Tfh+25°C à Tfh+50°C.

5. procédé selon l'une quelconque des revendications 1 à 4, **caractérisé en ce que** le catalyseur de polycondensation est un catalyseur phosphore, en particulier choisi parmi l'acide phosphoreux, l'acide phosphorique et l'hypophosphite de sodium, et tout particulièrement l'hypophosphite de sodium.

6. Procédé selon l'une quelconque des revendications 1 à 5, **caractérisé en ce que** le polyamide aliphatique comprend au mains une, notamment une, diamine aliphatique du type $H_2N-R_1-NH_2$ dans lequel $R_1$ est un radical aliphatique comprenant au moins 2 atomes de carbone, en particulier au moins 4 atomes de carbone, tout particulièrement au moins 6 atomes de carbone, tout particulièrement $R_1$ comprend au plus 12 atomes de carbone.

7. Procédé selon l'une quelconque des revendications 1 à 6, **caractérisé en ce que** le polyamide aliphatique comprend au moins un, notamment un, diacide aliphatique du type $HOOC-R_2-COOH$ dans lequel $R_2$ est un radical aliphatique comprenant au moins 2 atomes de carbone, en particulier au moins 4 atomes de carbone, tout particulièrement aux mains 6 atomes de carbone, notamment R2 comprend au plus 12 atomes de carbone.

8. Procédé selon l'une quelconque des revendications 1 à 7, **caractérisé en ce que** le polyamide aliphatique comprend, voire consiste, en unités de répétitions provenant d'aminoacides aliphatiques, notamment du type $H_2N-R_3-COOH$, dans lequel $R_3$ est un radical aliphatique comprenant au moins 2 atomes de carbone, notamment $R_3$ peut également comprendre au plus 18 atomes de carbone, tout particulièrement le radical aliphatique est linéaire, ramifie ou cyclique, voire les aminoacides ou les lactames sont choisis parmi le caprolactame, l'acide amino-undécanoique, le lauryllactame et les mélanges de ceux-ci.

9. Procédé selon l'une quelconque des revendications 1 à 8, **caractérisé en ce que** le diacide aromatique comprend au moins 8 atomes de carbone.

10. Procédé selon l'une quelconque des revendications 1 à 9, caractérisé en ce la diamine aromatique comprend au moins 8 atomes de carbone.

11. Procédé selon l'une quelconque des revendications 1 à 10, **caractérisé en ce que** les co-polyamides sont déséquilibrés, en particulier lorsque les polyamides aliphatiques présentent une GTC > GTA, les polyamides semi-aromatiques présentent une GTA > GTC, et vice-versa, tout particulièrement le polyamide aliphatique présente une I GTA-GTC I supérieure ou égale à 150 meq/kg et/ou le polyamide semi-aromatique présente une I GTA-GTC I supérieure ou égale à 40 meq/kg.

12. Co-polyamide bloc semi-cristallin comprenant au moins un bloc aliphatique et au moins un bloc semi-aromatique susceptible d'être obtenu par le procédé tel que défini selon l'une quelconque des revendications 1 à 11.

13. Composition comprenant, voire consistant en, au moins un co-polyamide tel que défini selon la revendication 12, en particulier comprenant des charges de renfort et/ou de remplissage ; au moins un agent ignifugeant ; des agents modifiants la résistance aux chocs ; des additifs classiquement utilises pour la fabrication de compositions polyamides ; et des mélanges de ces différents composes.

14. Granulé comprenant, voire consistant en, au moins un co-polyamide tel que défini selon la revendication 12, ou d'une composition telle que définie selon la revendication 13.

**15.** procédé de fabrication d'un article comprenant la mise en forme d'une composition telle que définie selon la revendication 13, en particulier par moulage, notamment moulage par injection, rotomoulage, frittage, coulée, ou extrusion comme l'extrusion soufflage et le filmage, tout particulièrement la composition est sous forme de granules.

**16.** Utilisation de co-polymere bloc selon la revendication 12 en tant que :

- agent augmentant la différence de viscosités η d'une composition polymérique, en particulier polyamide, en fonction des vitesses de cisaillement, en particulier par rapport au PA66, tout particulièrement mesurée de la manière définie dans les exemples,
- agent améliorant la résistance au choc d'une composition polymérique, et en particulier polyamide, ledit choc pouvant être le choc Charpy, tout particulièrement mesurée de la manière définie dans les exemples,
- agent améliorant l'imperméabilité d'une composition polymérique, et en particulier polyamide, ladite imperméabilité pouvant être l'imperméabilité à l'éthanol, tout particulièrement mesurée de la manière définie dans les exemples, et/ou agent améliorant la durée de vie en fatigue d'une composition polymérique, et en particulier polyamide, ladite durée de vie fatigue pouvant être mesurée de la manière définie dans les exemples.

**Patentansprüche**

**1.** Verfahren zur Herstellung aus der Schmelze von Copolyamid, umfassend mindestens einen aliphatischen Block und einen halbaromatischen Block, wobei das Verfahren mindestens die folgenden Schritte umfasst:

- Mischen mindestens eines aliphatischen Polyamids und mindestens eines halbaromatischen Polyamids, wobei die Polyamide mit Funktionen enden, die miteinander reagieren können,
- Erhitzen der Mischung, so dass die Polyamide geschmolzen werden und eine Polykondensationsreaktion zwischen den Polyamiden stattfinden kann,
- Gewinnen des Copolyamids, umfassend mindestens einen aliphatischen Block und mindestens einen halbaromatischen Block,

wobei das halbaromatische Polyamid besteht aus

- einer aromatischen Disäure, enthaltend mindestens eine Funktion vom Alkohol- und/oder Sulfonattyp, kombiniert mit einem einzigen Diamin, oder
- einem aromatischen Diamin, enthaltend mindestens eine Funktion vom Alkohol- und/oder Sulfonattyp, kombiniert mit einer einzigen Disäure;

wobei die Mischung einen Polykondensationskatalysator umfasst,
die Dauer des Polykondensationsschritt weniger als 10 Minuten beträgt, die Temperatur, bei der die Polykondensationsreaktion durchgeführt wird, größer ist als die höchste Schmelztemperatur der vorhandenen Polyamide (Thf), und
wobei die Blöcke eine mittlere Größe von mindestens 3 Wiederholungseinheiten aufweisen, wobei diese mittlere Größe mittels NMR gemessen wird, wie in der Beschreibung beschrieben.

**2.** Verfahren nach Anspruch 1, **dadurch gekennzeichnet, dass** es durch reaktive Extrusion durchgeführt wird.

**3.** Verfahren nach Anspruch 1 oder 2, **dadurch gekennzeichnet, dass** die Dauer des Polykondensationsschritts weniger als 6 Minuten beträgt.

**4.** Verfahren nach einem der Ansprüche 1 bis 3, **dadurch gekennzeichnet, dass** die Temperatur, bei er der Polykondensationsschritt durchgeführt wird, von der höchsten Schmelztemperatur bis zur höchsten Schmelztemperatur plus 80 °C, insbesondere von Tfh+20 °C bis Tfh+80 °C und insbesondere Tfh+25 °C bis Tfh+50 °C reicht.

**5.** Verfahren nach einem der Ansprüche 1 bis 4, **dadurch gekennzeichnet, dass** der Polykondensationskatalysator ein Phosphorkatalysator ist, insbesondere ausgewählt aus Phosphoriger Säure, Phosphorsäure und Natriumhypophosphit und insbesondere Natriumhypophosphit.

**6.** Verfahren nach einem der Ansprüche 1 bis 5, **dadurch gekennzeichnet, dass** das aliphatische Polyamid mindestens ein, insbesondere ein, aliphatisches Diamin vom $H_2N-R_1-NH_2$-Typ umfasst, worin $R_1$ ein aliphatischer Rest

ist, umfassend mindestens 2 Kohlenstoffatome, insbesondere mindestens 4 Kohlenstoffatome, ganz besonders mindestens 6 Kohlenstoffatome, worin $R_1$ insbesondere mehr als 12 Kohlenstoffatome umfasst.

7. Verfahren nach einem der Ansprüche 1 bis 6, **dadurch gekennzeichnet, dass** das aliphatische Polyamid mindestens eine, insbesondere eine aliphatische Disäure vom HOOC-$R_2$-COOH-Typ umfasst, worin $R_2$ ein aliphatischer Rest ist, umfassend mindestens 2 Kohlenstoffatome, insbesondere mindestens 4 Kohlenstoffatome, ganz besonders mindestens 6 Kohlenstoffatome, worin $R_2$ insbesondere mehr als 12 Kohlenstoffatome umfasst.

8. Verfahren nach einem der Ansprüche 1 bis 7, **dadurch gekennzeichnet, dass** das aliphatische Polyamid Wiederholungseinheiten umfasst oder sogar daraus besteht, die von aliphatischen Aminosäuren abgeleitet sind, insbesondere vom $H_2N$-$R_3$-COOH-Typ, worin $R_3$ ein aliphatischer Rest ist, umfassend mindestens 2 Kohlenstoffatome, worin $R_3$ insbesondere auch mehr als 18 Kohlenstoffatome umfassen kann, der aliphatische Rest ganz besonders linear, verzweigt oder cyclisch ist, oder sogar die Aminosäuren oder die Lactame ausgewählt sind aus Caprolactam, Aminoundecansäure, Lauryllactam und Mischungen davon.

9. Verfahren nach einem der Ansprüche 1 bis 8, **dadurch gekennzeichnet, dass** die aromatische Disäure mindestens 8 Kohlenstoffatome umfasst.

10. Verfahren nach einem der Ansprüche 1 bis 9, **dadurch gekennzeichnet, dass** das aromatische Diamin mindestens 8 Kohlenstoffatome umfasst.

11. Verfahren nach einem der Ansprüche 1 bis 10, **dadurch gekennzeichnet, dass** die Copolyamide unausgewogen sind, insbesondere wenn die aliphatischen Polyamide eine GTC > GTA aufweisen, die halbaromatischen Polyamide eine GTA > GTC aufweisen, und umgekehrt, das aliphatische Polyamid insbesondere eine |GTA-GTC| größer oder gleich 150 meq/kg aufweist und/oder das halbaromatische Polyamid eine |GTA-GTC| größer oder gleich 40 meq/kg aufweist.

12. Halbkristalliner Copolyamidblock, umfassend mindestens einen aliphatischen Block und mindestens einen halbaromatischen Block, der mit dem Verfahren nach einem der Ansprüche 1 bis 11 erhalten werden kann.

13. Zusammensetzung, umfassend, oder sogar bestehend aus mindestens einem Copolyamid nach Anspruch 12, insbesondere umfassend Verstärkungsstoffe und/oder Füllstoffe; mindestens ein Flammschutzmittel; Mittel, die die Schlagzähigkeit modifizieren; Zusätze, die üblicherweise zur Herstellung von Polyamidzusammensetzungen verwendet werden; und Mischungen dieser verschiedenen Verbindungen.

14. Granulat, umfassend oder sogar bestehend aus mindestens einem Copolyamid nach Anspruch 12 oder einer Zusammensetzung nach Anspruch 13.

15. Verfahren zum Herstellen eines Gegenstands, umfassend das Formen der Zusammensetzung nach Anspruch 13, insbesondere durch Formen, insbesondere Spritzgießen, Rotationsformen, Sintern, Gießen oder Extrudieren, wie Extrusionsblasformen und Filmbildung, insbesondere liegt die Zusammensetzung in Form von Granulat vor.

16. Verwendung von Blockcopolymeren nach Anspruch 12 als :

    - ein Mittel zur Erhöhung des Viskositätsunterschieds η einer polymeren Zusammensetzung, insbesondere eines Polyamids, in Abhängigkeit von den Schergeschwindigkeiten, insbesondere gegenüber PA66, insbesondere gemessen auf die in den Beispielen definierte Weise,
    - ein Mittel, das die Schlagzähigkeit einer Polymerzusammensetzung und insbesondere eines Polyamids verbessert, wobei die Schlagzähigkeit die Charpy-Kerbschlagzähigkeit sein kann, insbesondere gemessen wie in den Beispielen definiert,
    - ein Mittel, das die Undurchlässigkeit einer polymeren Zusammensetzung und insbesondere von Polyamid verbessert, wobei die Undurchlässigkeit Ethanolundurchlässigkeit sein kann, die insbesondere in der in den Beispielen definierten Weise gemessen werden kann, und/oder ein Mittel, das die Lebensdauer bei Ermüdung einer Polymerzusammensetzung und insbesondere eines Polyamids verbessern kann, wobei die Ermüdungslebensdauer auf die in den Beispielen definierte Weise gemessen werden kann.

**Claims**

1. Process for the melt preparation of a semi-crystalline copolyamide comprising at least one aliphatic block and at least one semi-aromatic block, said process comprising at least the following steps:

   - mixing at least one aliphatic polyamide and at least one semi-aromatic polyamide, said polyamides being terminated with functions that are capable of reacting together,
   - heating the mixture so that the polyamides are molten and a polycondensation reaction may take place between the polyamides,
   - recovering the copolyamide comprising at least one aliphatic block and at least one semi-aromatic block,

   said semi-aromatic polyamide consisting of

   - an aromatic diacid containing at least one function of the alcohol and/or sulfonate type, combined with only one diamine, or
   - an aromatic diamine containing at least one function of the alcohol and/or sulfonate type, combined with only one diacid;

   in which the mixture comprises a polycondensation catalyst,
   the duration of the polycondensation step is less than 10 minutes,
   the temperature at which the polycondensation reaction is performed is higher than the highest melting point of the polyamides present (Thm), and
   the blocks have a mean size of at least 3 repeating units, this mean size is measured by NMR as described in the description.

2. Process according to Claim 1, **characterized in that** it is performed by reactive extrusion.

3. Process according to Claim 1 or 2, **characterized in that** the duration of the polycondensation step is less than 6 minutes.

4. Process according to any one of Claims 1 to 3, **characterized in that** the temperature at which the polycondensation step is performed ranges from the highest melting point to the highest melting point plus 80°C, especially from Thm+20°C to Thm+80°C and in particular from Thm+25°C to Thm+50°C.

5. Process according to any one of Claims 1 to 4, **characterized in that** the polycondensation catalyst is a phosphorus catalyst, chosen in particular from phosphorous acid, phosphoric acid and sodium hypophosphite, and most particularly sodium hypophosphite.

6. Process according to any one of Claims 1 to 5, **characterized in that** the aliphatic polyamide comprises at least one, especially one, aliphatic diamine of the type $H_2N-R_1-NH_2$ in which $R_1$ is an aliphatic radical comprising at least 2 carbon atoms, in particular at least 4 carbon atoms, most particularly at least 6 carbon atoms, and most particularly $R_1$ comprises not more than 12 carbon atoms.

7. Process according to any one of Claims 1 to 6, **characterized in that** the aliphatic polyamide comprises at least one, especially one, aliphatic diamine of the type $HOOC-R_2-COOH$ in which $R_2$ is an aliphatic radical comprising at least 2 carbon atoms, in particular at least 4 carbon atoms, most particularly at least 6 carbon atoms, and $R_2$ especially comprises not more than 12 carbon atoms.

8. Process according to any one of Claims 1 to 7, **characterized in that** the aliphatic polyamide comprises, or even consists of, repeating units originating from aliphatic amino acids, especially of the type $H_2N-R_3-COOH$ in which $R_3$ is an aliphatic radical comprising at least 2 carbon atoms, and especially $R_3$ may also comprise not more than 18 carbon atoms, the aliphatic radical most particularly being linear, branched or cyclic, or even the amino acids or lactams are chosen from caprolactam, aminoundecanoic acid and lauryllactam, and mixtures thereof.

9. Process according to any one of Claims 1 to 8, **characterized in that** the aromatic diacid comprises at least 8 carbon atoms.

10. Process according to any one of Claims 1 to 9, **characterized in that** the aromatic diamine comprises at least 8 carbon atoms.

11. Process according to any one of Claims 1 to 10, **characterized in that** the copolyamides are disequilibrated, in particular when the aliphatic polyamides have a GTC > GTA, the semi-aromatic polyamides have a GTA > GTC, and vice versa, and most particularly the aliphatic polyamide has a |GTA-GTC| of greater than or equal to 150 meq./kg and/or the semi-aromatic polyamide has a |GTA-GTC| of greater than or equal to 40 meq./kg.

12. Semi-crystalline block copolyamide comprising at least one aliphatic block and at least one semi-aromatic block, which may be obtained via the process as defined according to any one of Claims 1 to 11.

13. Composition comprising, or even consisting of, at least one copolyamide as defined according to Claim 12, in particular comprising reinforcing and/or bulking fillers; at least one flame retardant; impact strength modifiers; additives conventionally used for manufacturing polyamide compositions; and mixtures of these various compounds.

14. Granule comprising, or even consisting of, at least one copolyamide as defined according to Claim 12 or of a composition as defined according to Claim 13.

15. Process for manufacturing an article, comprising the forming of a composition as defined according to Claim 13, in particular by molding, especially by injection molding, rotational molding, sintering or casting, or by extrusion, such as extrusion blow-molding and film-forming, the composition most particularly being in the form of granules.

16. Use of the block copolymer according to Claim 12, as :

- an agent for increasing the difference in viscosity $\eta$ of a polymer composition, in particular a polyamide, as a function of the shear rates, in particular relative to PA66, most particularly measured in the manner defined in the examples,
- an agent for improving the impact strength of a polymer composition, and in particular a polyamide, said impact possibly being the Charpy impact, most particularly measured in the manner defined in the examples,
- an agent for improving the impermeability of a polymer composition, and in particular a polyamide, said impermeability possibly being the impermeability to ethanol, most particularly measured in the manner defined in the examples, and/or an agent for improving the fatigue life of a polymer composition, and in particular a polyamide, said fatigue life possibly being measured in the manner defined in the examples.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2003171494 A1
- EP 0615997 A1
- WO 2010034805 A1
- WO 2011147739 A1
- US 6344158 B
- US 6365071 B
- US 6211402 B
- US 6255371 B

**Littérature non-brevet citée dans la description**

- **K. L. L. EERSELS et al.** *Macromolecules,* 01 Janvier 1996, vol. 29 (21), 6744-6749
- *CHEMICAL ABSTRACTS,* 13560-89-9